Europäisches Patentamt

European Patent Office

Office européen des brevets

(11) Publication number: **0 034 923**
**B1**

# EUROPEAN PATENT SPECIFICATION

(45) Date of publication of patent specification: **28.08.85**

(51) Int. Cl.⁴: **G 01 B 11/275,** G 01 B 5/255

(21) Application number: **81300691.3**

(22) Date of filing: **19.02.81**

(54) Target structure for use with a vehicle wheel alignment apparatus.

(30) Priority: **19.02.80 US 122530**

(43) Date of publication of application:
**02.09.81 Bulletin 81/35**

(45) Publication of the grant of the patent:
**28.08.85 Bulletin 85/35**

(84) Designated Contracting States:
**AT BE CH DE FR GB IT LI LU NL SE**

(56) References cited:
**GB-A-1 423 373**
**US-A-1 840 766**
**US-A-3 337 961**
**US-A-3 709 451**

(73) Proprietor: **HEIN-WERNER CORPORATION**
**1005 Perkins Avenue**
**Waukesha Wisconsin 53187 (US)**

(72) Inventor: **Eck, Leonard F.**
**1101 West First Street**
**McPherson Kansas 67460 (US)**

(74) Representative: **Allen, William Guy Fairfax**
**J.A. KEMP & CO. 14 South Square Gray's Inn**
**London WC1R 5EU (GB)**

The file contains technical information submitted after the application was filed and not included in this specification

Courier Press, Leamington Spa, England.

## Description

This invention relates to target structures for use with a vehicle wheel alignment apparatus.

Vehicles, such as automobiles and trucks require periodic maintenance checks and adjustment of wheel alignment. While proper alignment is set when the vehicle is manufactured, after extensive usage, misalignment may result from the vehicle striking curbs, potholes and the like, and handling difficulties may be experienced. Misaligned wheels may impart a poor ride to the vehicle and give excessive tyre wear; the vehicle may tend to wander and pull to one side, which requires constant and annoying steering wheel correction by the driver, may have hard steering, front tyre shimmy and, particularly with rear dual wheels of truck tractors, trailers and the like, a tendency toward oversteering or understeering and improper tracking.

For vehicle front wheels, front end alignment depends on the precise geometric relationship of a number of inter-related parts, even when they are changing relative positions, which provide front wheel stability and control. These geometric angles include toe-in/toe-out, camber, caster and kingpin inclination (sometimes termed steering axis cant).

"Camber" is the angle at which the centreline of the wheel is tilted away from the vertical in an unloaded condition so that the wheel becomes vertical when the weight of the vehicle is on the wheel. "Toe" is a horizontal measurement of the amount which the wheels are closer together at the front than at the rear of the wheel (toe-in), or vice-versa (toe-out). Both camber and toe are related to vehicle weight on the wheels and to compressive forces occurring on the steering linkage with forward speed. Normally, the greater the camber, the greater is the toe-in.

"Caster" is an angle of the upper ball joint toward the rear of the vehicle, and moves the pivot point of the wheel forwardly of the tyre's centre and provides yet another type of directional stability by causing a drag on the bottom of the wheel when it turns, thereby resisting the turn and tending to hold the steering wheel steady in the direction of straight ahead vehicle movement. Too slight a caster angle will cause the wheels to wander or weave at high speed and steer erratically when the brakes are applied. In contrast, too great a caster angle encourages hard steering and low speed shimmy. Generally, placing the weight of the car directly over the pivot point allows for the easiest possible steering and tends to remove load from the outside wheel race bearings.

Steering axis cant, or kingpin inclination in vehicles employing a kingpin, is the angle from the vertical at which the steering knuckle is attached to the upper and lower ball joints. The canted steering knuckle controls wheel directional stability by forcing the wheel to lift the chassis in order to turn from a straight ahead direction. As the steering arm releases force on the wheel, the wheel automatically tends to return to its straight ahead position under the downward force of the weight of the chassis.

Straight "tracking" is the condition whereby the rear wheels of the vehicle follow the front wheels in parallel relation, this easing steering and reducing tyre wear.

There is already known a target structure for use with a vehicle wheel alignment apparatus, said target structure comprising a target support having an elongate guide to support a target at an adjustable location therealong, a mounting assembly mountable on the outer side of a vehicle wheel to mount the target support alongside that vehicle wheel, and the target being attachable to the elongate guide of the target support so as to be spaced from the axis of rotation of that vehicle wheel.

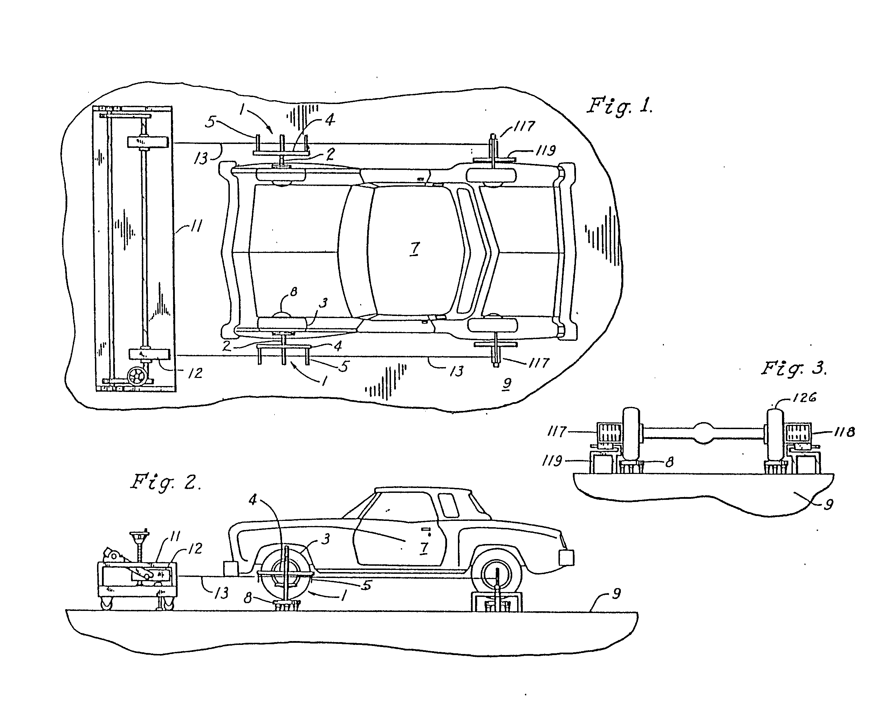

For example, as shown in Figure 1 of US—A—3709451 two vertical shafts define a guide for a target in the form of a mirror which is adjustable radially of a wheel whose alignment is to be checked and the shafts are attached to the wheel by means of a mounting assembly. Wheel alignment is determined by measuring the reflective path of a beam from the mirror.

Furthermore, US—A—1840766 shows a mechanical angular gauge, instead of an optical target alignment apparatus, the gauge being mounted with respect to the wheel by arms which extend towards and grip the rim of the wheel to be checked.

On the other hand, US—A—3337961 discloses an optical and mechanical instrument which is mounted on a wheel rim and extends forwardly therefrom and projects light rays both parallel to and perpendicular to the face of the wheel to be checked.

GB—A—1423373 discloses an angular position transducer apparatus which is mounted on a wheel and includes a rim which engages arms to position a bar relative to the wheel. On one end of the bar is a weight and on the other end is the angular position transducer. This latter device projects light beams parallel and perpendicular to the plane of the wheel.

The principal object of the present invention is to provide a target structure for use with alignment apparatus for determining angular alignment relationships of the wheels, but offering improved functioning with respect to the prior art types of wheel alignment apparatus. Accordingly, the target structure of the present invention is characterised in that there are two of said elongate guides in orthogonal relationship and at least two targets supported on a respective said elongate guide and each having a planar face extending laterally of the outer side of the wheel and having thereon indicia: and in that the elongate guides are arranged relative to the mounting assembly so that the targets can be positioned on opposed cardinal locations relative to said vehicle wheel axis such that said cardinal locations are selectable from vertically aligned upper and lower locations and horizontally aligned front and rear locations relative to the axis of rotation of the wheel.

In order that this invention will become more fully understood, the following description is given, merely by way of example, reference being made to the accompanying drawings, in which:—

Figure 1 is a plan view of one embodiment of target structure according to the present invention, and shown in connection with an automotive vehicle and a line of sight wheel alignment apparatus;

Figure 2 is a side elevational view of the arrangement of Figure 1;

Figure 3 is a diagrammatic, elevational view of rear wheel target structures positioned adjacent rear wheels of the vehicle;

Figure 4 is a side elevational view of the target structure of Figure 1 mounted upon a vehicle wheel;

Figure 5 is a fragmentary, front elevational view of the target structure and wheel of Figure 4;

Figure 6 is a front elevational view of a preferred embodiment of vehicle rear wheel target structure;

Figure 7 is a fragmentary front elevational view of an alternate embodiment of the vehicle rear wheel target structure;

Figure 8 is a view similar to Figure 4, with the addition of a kingpin inclination measuring device;

Figure 9 is a fragmentary front elevational view of the target structure and wheel of Figure 8;

Figure 10 is an enlarged, side elevational view of the kingpin inclination measuring device;

Figure 11 is a front elevation of the device of Figure 10;

Figure 12 is a section through the device of Figure 10 and showing the rear target thereof;

Figures 13, 14, 15, 16 and 17 are enlarged elevational views of a front toe target, the rear toe target, the upper camber target, the upper caster target and the bottom camber-caster target;

Figures 18 and 19 are diagrammatic, front elevational views showing the vehicle front wheel lifted from ground contact and turned in one direction and the opposite direction respectively, to provide a measurement for determining kingpin inclination;

Figures 20 and 21 are side elevational views of the target structure and vehicle wheel as shown in Figures 18 and 19 respectively;

Figures 22 and 23 are diagrammatic, front elevational views of the front wheels of the vehicle showing the wheels with target structures thereon and raised from ground contact and in ground contact respectively;

Figures 24 and 25 are diagrammatic, front elevational views of a vehicle wheel with a target structure thereon and shown with respect to the measurement of camber and toe respectively, the angle of which is exaggerated for purposes of illustration;

Figure 26 is a diagrammatic, plan view of a vehicle axle and front wheels thereof and shown with respect to the measurement of caster; and

Figures 27 and 28 are diagrammatic, front elevational views showing a measurement of caster in one turning direction and the opposite turning direction respectively of a wheel.

The target structure 1 shown comprises a mounting assembly 2 removably fixed to a wheel 3 and a target support 4, pivotally mounted on the mounting assembly 2. The target support 4 supports a plurality of targets 5 having discrete indicia thereon, toward which beams from a line of sight alignment apparatus are directed.

As illustrated in Figures 1 and 2, a vehicle 7 is positioned so that access is obtained to the underside thereof, by raising on roller plates 8 movable on the flat surface of the garage floor 9. A ramp or other vehicle elevating and supporting structure may be used in those situations where a permanent or semi-permanent installation is desired. A line of sight vehicle alignment apparatus 11 has projectors 12 that project beams or lines of sight 13 towards targets 5 located on the wheels 3 of the vehicle 7.

The mounting assembly 2 of the target structure 1 has an upstanding shaft member 19 which, in the illustrated example, extends substantially the diameter of the wheel 3. The shaft member 19 is comprised of square tubing and has upper and lower arm members 20 and 21 slidably affixed to the shaft member 19 for attachment to the tyre bead flange 16 of the wheel rim 17. The upper and lower arm members 20 and 21 have respective sleeve ends 22 and 23, provided with fixing screws and selectively slidable upwardly and downwardly on the shaft member 19, coaxially to align the centre 24 with the wheel hub centre.

An upper arm portion 27 is swingably fixed by a pivot pin 28 to a yoke extending upwardly from an inclined portion 25 of arm member 20 and has an upper rim engaging hook shaped catch secured to its upper end by a fastener 29 for swivelling of the catch 30 on the arm end and engaging the annular surface of the tyre bead flange 16 by slipping between the flange and the tyre. The catch 30 is maintained in engagement with the flange 16 by adjustment of a screw arrangement 31 having a knob 32 adapted for grasping and rotating the screw arrangement 31, to raise or lower the arm 27 and the catch 30 as desired and thereby effect the engagement of the catch 30 with the tyre bead flange 16 as desired.

Extending outwardly from the inclined portion 26 of lower arm 21 and inwardly toward the wheel rim 17 are a pair of diverging, spaced lower rim engaging arm portions 35 and 36, which each respectively have hook shaped catches 37 fixed to ends thereof, by fasteners permitting swivelling of the catches 38 and for engaging the annular surface of the tyre bead flange 16 between the flange and the tyre.

The target support member 4 includes a vertical shaft member 40 and a horizontal shaft member 41, preferably of the same length, and which are secured together in orthogonal relationship to form a cross-structure having a centre 42. The horizontal shaft 41 has opposite sleeve portions 44 and 45 telescopically received on opposite ends thereof, clamping fasteners 46 extending through the telescopic sleeve portions 44 and 45, to lock them in selective positions on the horizontal shaft 41.

A threaded shaft 48 secured to and extending laterally from centre 24 of the mounting assembly 2 passes through the centre 42 of the target support 4. The shaft 48 permits rotation of the target support 4 relative to the mounting assembly 2, whereby the target support 4 can be maintained with the shaft member 40 vertical and the shaft member 41 horizontal to provide accurate measurement, regardless of the amount of left or right turn of the wheels 3.

In order to facilitate rotation of support 4 relative to assembly 2, a spacer 49 is sleeved on the threaded shaft 48 between the support 4 and member 2. A threaded knob 50 is mounted on an end of the threaded shaft 48 and locks the target support 4 at a selected rotational position.

A levelling indicator vial 52, having its longitudinal axis orthogonal to the upstanding shaft member 40, is mounted on the target support 4 below centre 42.

A plurality of targets 5 is supported by the vertical shaft member 40 and the horizontal shaft member 41 and is positioned to extend outwardly of the wheel 3. The vertical shaft member 40 has upper and lower end portions 54 and 55 and the sleeve portions 44 and 45 respectively have front and rear end portions 56 and 57. Each end portion has an arm 59 extending outwardly thereof away from the wheel 3. The targets 5 are fixed to sleeve members 60, which slide over the arms 59, and have fasteners 61 to lock the target 5 in a desired position on the arm 59.

The targets 5 are located at opposite vertical and horizontal positions around the wheel rim 17, to provide upper and lower targets 63 and 64 and front and rear targets 65 and 66. An arm 67 extends outwardly from the vertical shaft member 40 from a position intermediate the upper end portion 54 and the centre 42 and carries a lower-upper target 68. The targets are planar in configuration and comprise a sturdy, shatter-resistant material such as plastic, aluminium or the like and generally have a plurality of indicia as described below.

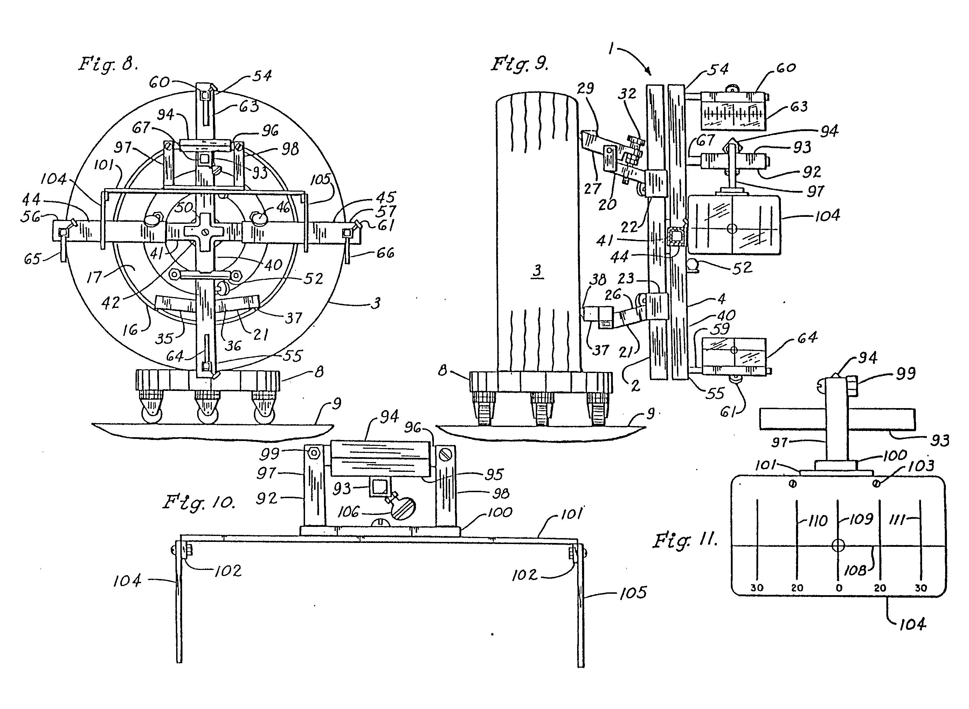

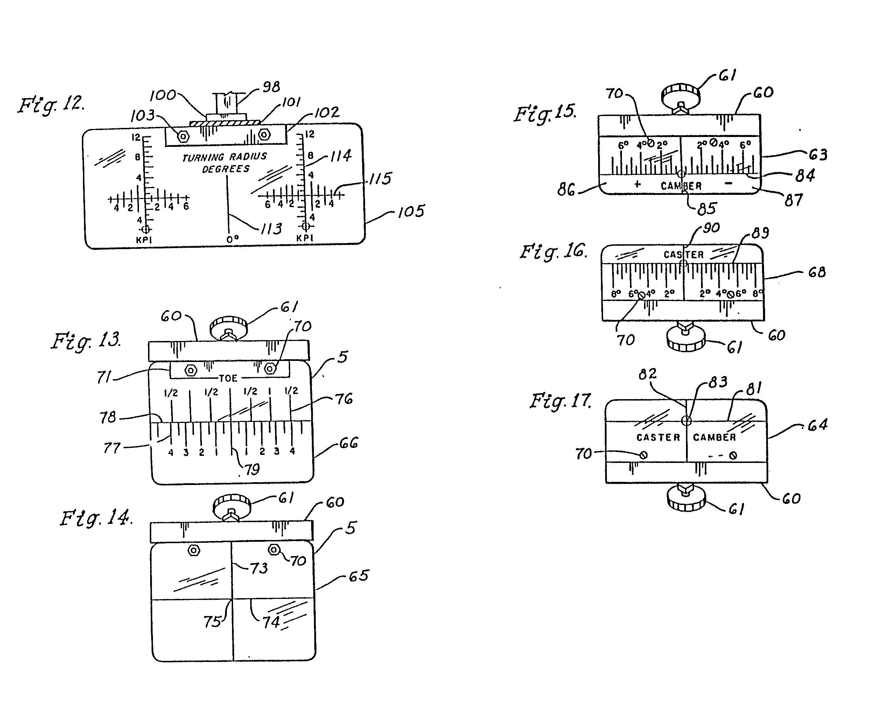

The targets are individually illustrated in Figures 10 to 17. Figures 13 and 14 show rear and front targets, 66 and 65, which are used to measure horizontal angular relationships such as toe in or toe out. Either of the targets shown in Figures 13 and 14 may be positioned forwardly of the other provided that the front target is composed of a transparent material, such as Plexiglas, which permits a beam 13 to pass therethrough and visually impinge upon a scale mark of the rear target, which may be of an opaque material, such as aluminium. Each of the targets 63, 64, 65 and 66 is connected to the sleeve member 60 therefor by fasteners 70 which extend through a flange 71 fixed to the sleeve member 60.

The front target 65 has vertical and horizontal lines 73 and 74 which cross at 75 and form a central aiming point for impingement of a beam 13 thereon. The rear target 66 includes a horizontal scale marked, for example, both in inches 76 and centimeters 77 and separated by a horizontal line 78. A vertical zero line 79 divides the target into toe in and toe out sides depending upon which of the vehicle wheels is being measured for toe.

Figures 15, 16 and 17 show upper and lower sets of targets which are used to measure vertical angular relationships, such as camber, and measurements which are predominantly vertical but with a horizontal component, such as caster. The lower target 64, Figure 17, has horizontal and vertical lines 81 and 82 which cross at 83 and provide an aiming point for the beam 13. The upper target 63, Figure 15, has a camber scale showing camber in plus and minus degrees from zero to eight along a horizontal scale 84. Plus and minus sides 86 and 87 of the scale are divided by a vertical zero line 85.

The lower-upper target 68, Figure 16, has a caster scale and provides a measurement of caster from zero to ten degrees along a horizontal scale 89 divided into opposite sides by a vertical zero line 90 to provide measurements of the wheel 3 during left and right turns.

Figures 10, 11 and 12 show targets 104, 105 which are used to measure the predominently horizontal angular relationship of kingpin inclination and are positioned on a target hanger device 92, Figures 8 to 11. The target hanger device 92 includes a first sleeve member 93 which is secured to a second sleeve member 94 at right angles thereto. The first sleeve member 93 is of square tubing of a size to receive the arm 67 and has a fastener 106 to clamp thereon. Preferably, the second sleeve member 94 is also of square tubing which is positioned so that a lower edge or corner 95 thereof is fixed, e.g. by welding, to the first sleeve member 93. A blade 96 extends through the second sleeve member 94 and has opposite ends thereof secured to spaced arms 97 and 98 by fasteners 99. Lower ends of the arms 97 and 98 are secured to a cross bar 100 which is in turn fixed to an elongate bar member 101 having downturned flanges 102 at opposite ends thereof. Fasteners 103 secure front and rear kingpin inclination targets 104 and 105 to the flanges 102 in spaced relation. The edge engagement of the blade member 96 with the lower corner 95 of the second sleeve member 94 permits the targets 104 and 105 to swing from side-to-side and remain oriented by gravity as the wheel 3 inclines during left and right turns. The target hanger device 92 is suspended from the arm 67 when the lower upper target 68 is removed and has a fixing screw 106. The kingpin inclination targets 104 and 105 are located along the generally horizontal cross shaft member 41 and radially inward of the front and rear targets 65 and 66.

The front kingpin inclination target 104, Figure 11, includes a horizontal reference line 108 and a vertical zero line 109 dividing the target 104 into left and right turn segments with 20 and 30 degree indicia 110 and 111 along the horizontal reference line 108.

The rear kingpin inclination target 105, Figure 12, includes a vertical zero line 113 dividing the target into left and right segments, each of the segments having a vertical scale 114 indicating vertical components of the orientation of the kingpin or ball joint connections and a horizontal scale 115 indicating horizontal components thereof.

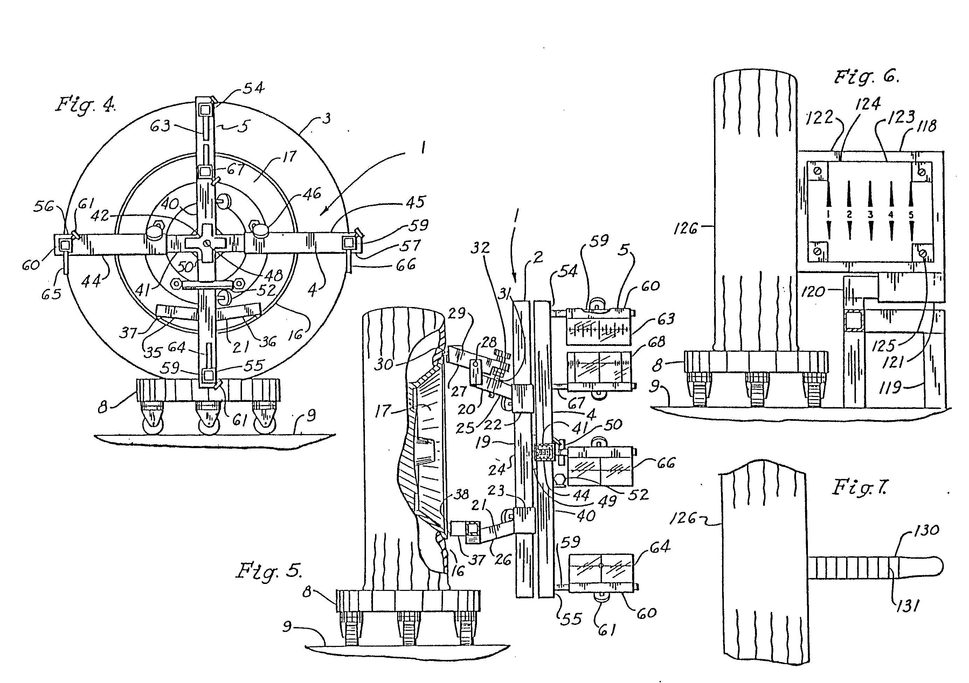

Additionally, indicia bearing left and right wheel targets 117 and 118, Figures 3 and 6, are positioned adjacent the rear wheels, which are not the subject of the alignment operation and do not have the target structure 1 mounted thereon. In the illustrated example, each of the targets 117 and 118 include an upright standard 119, having, for example, three supporting legs and an upper L-shaped member 120 on which is received a sleeve 121. A target frame 122 is fixed on top of the sleeve 121 and receives a target plate 123 having indicia 124 thereon and secured to the target frame 122 by fasteners 125. The wheel targets 117 and 118 are movable inwardly of the standard 119 and into abutment with the face of the wheel 126 by sliding the sleeve member 121 on the L-shaped member 120 until contact is achieved. The target plate 123 is thus able to reach over a roller plate 8 upon which the wheel 126 is situated and, in conjunction with the target structure 1 on wheel 3 provide an indication of proper tracking relationship and centreing of the wheel axle.

Alternatively, a rule 130, Figure 7, having indicia 131 thereon can be manually held against the wheel 126.

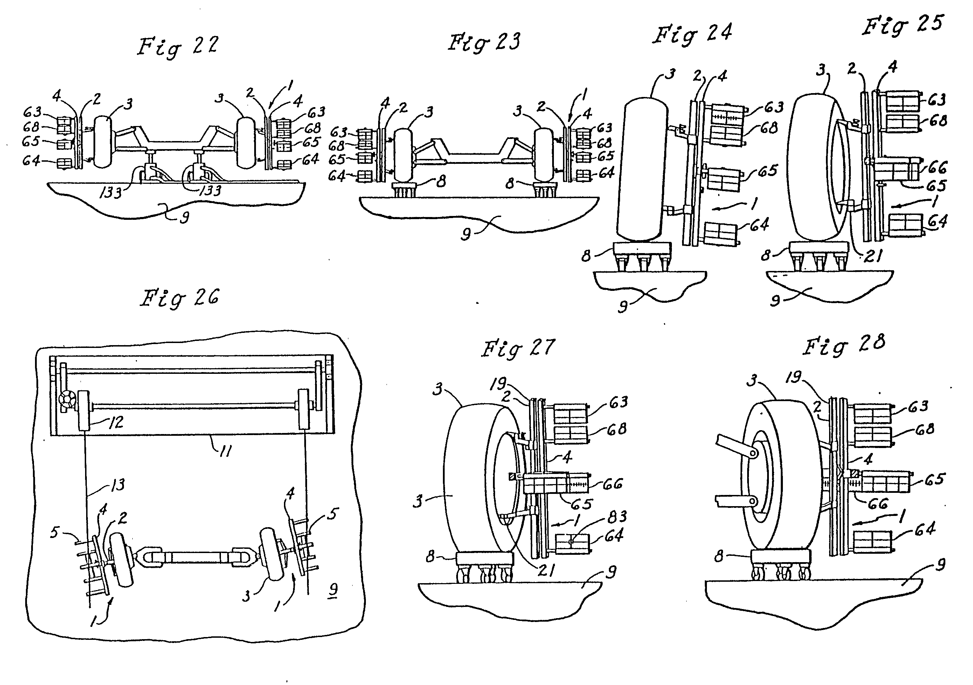

In use, the vehicle 7 is preferably positioned with the wheel 3 to be aligned as close as possible to the alignment apparatus 11. The vehicle 7 is lifted, as by power jacks 133, Figure 22, and the wheels 3 and 126 are positioned on the roller plates 8. The vehicle 7 is aligned as much as possible transverse to the alignment apparatus 11, Figures 1 and 2.

After checking for worn or loose fitting parts which must be replaced for alignment, target structures 1 are mounted to each of the wheels 3 by slipping the lower rim engaging tip ends 38 between the tyre bead flange 16 and the tyre. Loosening the fastener through the lower sleeve end 23, the inner shaft member 19 is moved upwardly or downwardly so as to place the centre 24 thereof in coaxial alignment with the hub of the wheel rim 17 and then the upper sleeve end 22 is moved on inner shaft member 19 until the tip of the catch 30 slips between the tyre bead flange 16 and the tyre. The fastener through the sleeve end 22 is tightened and the knob 32 of the screw arrangement 31 is grasped and rotated to tighten the catch 30 against the tyre bead flange 16 and attach the target structure 1 to the wheel 3.

The target support 4 is rotated relative to the mounting assembly 2 and rotated until the levelling vial 52 indicates shaft member 41 is horizontal, and thus shaft member 40 is vertical. The knob 50 is tightened to prevent inadvert relative rotation.

The sleeves 40 and 45 with the front and rear targets 65 and 66 thereon are moved along the horizontal shaft member 41 until the front and rear targets 65 and 66 generally coincide with the front and rear margins of the wheel 3 and thereby provide a true measurement of toe. The upper and lower targets 63 and 64 are not movable because the scales thereof are preferably calibrated with respect to a set distance or radius between the targets 63 and 68 and the lower target 64. It is preferred that the upper target 63 extend downwardly, the lower upper target 68 extend upwardly and the lower target 64 extend upwardly.

The line of sight beam projectors 12 are adjusted upwardly or downwardly until the beams 13 are horizontally directed to intersect the axis of the wheel rim 17 and the beam projectors 12 are selectively moved inwardly or outwardly until the beams 13 extend parallel to the sides of the vehicle 7 and are spaced laterally equidistant from the wheels 3 and 126, as indicated by the impingement of the light beams with the targets 117 and 118 or the handheld rule 130 in conjunction with targets on the target structure 1 thereby indicating parallelism of the lines of sight 13 with the sides of the vehicle 7.

After this, the wheels 3 to be aligned are checked for both lateral runout; i.e. misalignment in a plane perpendicular to the centre axis and radial runout; i.e. misalignment or eccentricity in the centre axis. In this procedure, the wheels 3 are raised from contact with the roller plate 8 by power jacks 133 so that the wheels 3 are substantially vertical, Figure 22. The line of sight beam projectors 12 are adjusted either upwardly or downwardly until the beams 13 therefrom extend horizontally to intersect the vehicle wheel axis. Next, the beams 13 are swept in a vertical plane toward either the upper targets 63 or the lower targets 64 to check for proper camber or vertical runout. The impingement of each beam 13 with a scale mark of either the upper or lower target 63 or 64 is preferably noted, and the wheel is then rotated 180 degrees and the impingement of the beam 13 noted upon the opposite target now in the beam. If there is deviation from proper vertical runout, suspension parts such as the upper control arm should be adjusted until the points of impingement lie at the same lateral scale mark on both targets.

Next, horizontal or toe runouts is checked by directing a beam 13 toward the horizontal front and rear targets 65 and 66 and noting the point of impingement of the beam 13 upon the front and rear targets 65 and 66. If there is deviation, suspension parts such as the tie rod should be adjusted until the point of impingement is the same on both targets. Runout checks are now complete and the wheel, when raised from ground contact and spun on its axis, should not wobble or spin eccentrically.

The wheels 3 are then lowered onto the roller plates 8, Figure 23, for checking camber, illustrated in an exaggerated manner in Figure 24. The beams 13 are adjusted to extend horizontally through the cross point 83 of the lower target 64 and then the beam is swept upwardly in a vertical plane to spot a point of impingement on the camber scale marks of the upper target 63 indicating, for example, two degrees of negative camber to the lower target 64. The deviation, or degree of vertical angle, appears as the difference from exactly vertical orientation between the beam impingement points of the upper and lower targets 63 and 64 and the camber scale 84 provides a measurement corresponding to actual degrees of camber. Adjustment of the suspension and steering parts may be necessary to set the manufacturer's specified camber angle.

In order to measure toe, Figure 25, the line of sight beam projectors 12 are kept above the floor surface 9 substantially the same height thereabove as the wheel hub or axle is situated above the floor surface, and a beam 13 is directed through the cross point 75 of the front target 65 and impinges upon the surface of the rear target 66, preferably along the horizontal line 78 on either a toe in or toe out side of the target. The front and rear targets 65 and 66 are adjacent the front and rear margins of the wheel and the deviation, or degree of horizontal angle from a straight ahead orientation is indicated on the rear target 66 and is a true measurement of toe. Adjustment of the proper vehicle steering and suspension member such as the tie rod, may be required.

Next to be checked is caster, Figures 26, 27 and 28, and this is measured with the weight of the vehicle upon the wheels to be aligned. Using a degree of turn indicating device, such as a radius plate, the wheels 3 are turned 20 degrees either left or right from a straight ahead direction, Figure 26. The line of sight beam projectors 12 are translated laterally to project beams 13 through the cross point 83 of the lower targets 64. The beams 13 are swept upwardly and a point of impingement noted upon the caster scale of the lower upper target 68, for example negative 2 degrees in a right turn, Figure 27. This is one direction of the angular rotational deviation caused by the cast of the upper ball joint. The wheels 3 are turned 40 degrees in the opposite direction, or 20 degrees past the straight ahead position, Figure 28, and the angular rotational deviation is noted upon the caster scale 89 of the lower upper target 68, for example, $\frac{3}{4}$ degree. The difference between the two measurements, for example $1\frac{1}{4}$ degrees, is the angle of caster of the wheel.

During both left and right turns, the target support 4 tends to rotate upwardly and downwardly about the axis of the wheel spindle. To provide precise measurement, prior to impingement of the beam 13 with the targets, the target support 4 is rotated relative to the mounting assembly 2 to return the cross shaft member 41 to a level orientation as indicated by the levelling vial 52. By levelling the horizontal shaft member 41, angular deviation caused by rocking of the wheel 3 about the inclined ball joint thereof is not erroneously introduced into the caster measurement.

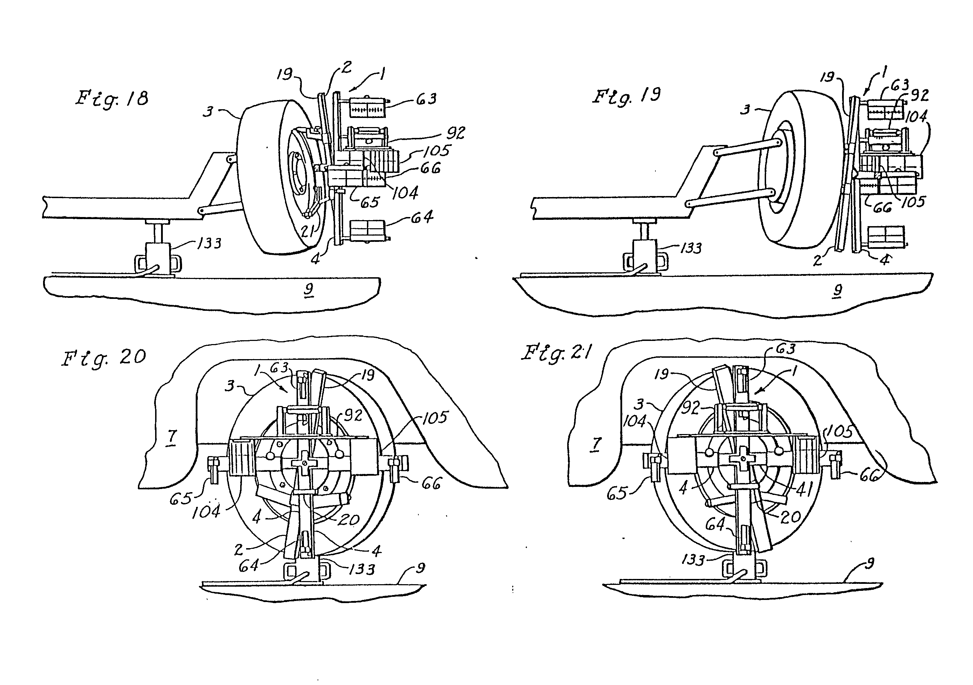

Steering axis cant or kingpin inclination, Figures 18, 19, 20 and 21, is determined with the weight of the vehicle 7 removed from the wheels 3 and with the vehicle raised, as by the jacks 133. The vehicle brakes are applied and held down to prevent rotation of the wheels. The lower upper target 68 is removed and replaced with the target hanger device 92 by urging the first sleeve member 93 thereof over the arm 67 and tightening the fixing screw 106. The wheels 3 are turned 20 degrees either left or right and the beam 13 projected through the front inclination target 109 coincident with one of the 20 degree scale marks, for example, an impingement of the beam with one of the vertical scale lines 114 on the rear kingpin inclination target 105, Figure 12, indicates degrees of turn of the wheel 3. Because the wheel tends to incline as it is steered left and right the target structure 1 also tends to incline and the horizontal shaft member 41 moves out of a horizontal orientation. To provide precise measurements, the target support 4 is rotated relative to the inner wheel mounting member 2 and levelling vial 52, Figures 20 and 21. The impingement of the beam 13 with one of the marks, either negative or positive on the vertical scale, 114, provides a component of kingpin inclination in that direction of turn.

Additionally, a measurement of turning radius degrees is provided on the horizontal scale 115. The wheels 3 are turned 40 degrees in the opposite direction, or 20 degrees past the straight ahead position and a point of the line of sight impingement is determined as indicated above for the opposite turn. The angle of steering axis cant is then determined by the average of the left and right turn measurements.

It will be apparent that the target structure 1 of the present invention has features which enable it to be easily and quickly used by even a relatively inexperienced vehicle mechanic. Intensive training is not required to enable the operator to understand the theory and procedures of operation of the apparatus, thus offering relatively few opportunities for error. Further, relatively precise scale measurements are individually indicated on the target structure 1.

**Claims**

1. A target structure for use with a vehicle wheel alignment apparatus, said target structure comprising a target support (4) having an elongate guide to support a target (5) at an adjustable location therealong, a mounting assembly (19 to 38) mountable on the outer side of a vehicle wheel (3) to mount the target support (4) alongside that vehicle wheel (3), and the target (5) being attachable to the elongate guide of the target support (4) so as to be spaced from the axis of rotation of that vehicle wheel (3), the target structure (4) being characterised in that there are two of said elongate guides (40, 41) in orthogonal relationship and at least two targets (63 to 68, 104, 105) supported on a respective said elongate guide (40, 41) and each having a planar face extending laterally of the outer side of the wheel (3) and having thereon indicia; and in that the elongate guides (40, 41) are arranged relative to the mounting assembly so that the targets (5) can be positioned on opposed cardinal locations relative to said vehicle wheel axis such that said cardinal locations are selectable from vertically aligned upper and lower locations (63, 64) and horizontally aligned front and rear locations (65, 66) relative to the axis of rotation of the wheel (3).

2. A target structure according to claim 1, characterised in that said target support is pivotally mounted on said mounting assembly by a pivot (48) located at the rotational centre of a wheel on which said mounting means is mounted.

3. A target structure according to claim 2, characterised in that said pivot comprises a bolt (48) carried by said mounting assembly, and passing through said support structure, and a threaded knob (50) threadably mounted on said bolt and permitting relative rotation between said target support and said mounting assembly, but allowing target support to be locked in a particular rotational position.

4. A target structure according to any preceding claim, characterised in that the mounting assembly includes an inner wheel mounting member (24), upper and lower arm members (20, 21) carried by said mounting member and having end portions (27, 37), including means (30, 38) for engagement with a wheel, whereby the mounting member may be mounted adjacent and in parallel relation to the side of a wheel.

5. A target structure according to any preceding claim, characterised in that said elongate guides of the target support (4) comprise horizontal shaft members (41, 44, 45) aligned with said horizontally spaced front and rear locations and vertical shaft members (40) aligned with said vertically spaced upper and lower locations, said horizontal and vertical shaft members together forming a cross having a centre coaxial with the rotational centre of a wheel on which the mounting means is mounted, there being four targets each mounted on a respective said shaft member at the location of the margin of a wheel.

6. A target structure according to claim 3, claim 4 and claim 5, characterised in that said target support includes a level indicator (52) for determining the horizontal orientation of the horizontal shaft members.

7. A target structure according to claim 5 or 6, characterised in that said shaft members (40, 44, 45) each have, extending from adjacent the free ends thereof, an arm (59) extending generally horizontally outwardly away from the wheel, the targets being mountable on said arms.

8. A target structure according to claim 7, wherein at least some of the arms (59) are mounted on end portions (60) which are adjustably clampable on the associated shaft member.

9. A target structure according to claim 5, 6, 7 or 8, characterised in that a front toe target (65) and a rear toe target (66) are mounted on the horizontal shaft members (44 and 45 respectively) and in that upper and lower caster/camber targets (63, 64) are mounted on the upper and lower ends respectively of the vertical elongate shaft member (40).

10. A target structure according to claim 5, 6, 7, 8 or 9, characterised in that a forward king pin inclination target (104) and a rearward king pin inclination target (105) are mounted for side to side swinging movement on a swing arm (96), swingable on a member (94) mountable on the target support.

**Patentansprüche**

1. Ausrichtscheibenanordnung zur Verwendung mit einer Justiervorrichtung für Fahrzeugräder, mit einem Ausrichtscheibenträger (4) mit einer langgestreckten Führung zum Tragen einer Ausrichtscheibe (5) entlang der Führung an einer einstellbaren Position, einer an der Außenseite eines Fahrzeugrades (3) befestigbaren Befestigungseinheit (19 bis 38) zum Befestigen des Ausrichtscheibenträgers (4) längsseits neben dem Fahrzeugrad (3), wobei die Ausrichtscheibe (5) an der länglichen Führung des Ausrichtscheibenträgers (4) derart anbringbar ist, daß sie einen Abstand von der Drehachse des Fahrzeugrades (3) aufweist, dadurch gekennzeichnet, daß zwei derartige langgestreckte Führungen (40, 41) in rechtwinkliger Beziehung und zumindest zwei Ausrichtscheiben (63 bis 68, 104, 105), die auf jeweils einer der länglichen Führungen (40, 41) getragen sind und jeweils eine ebene Stirnseite, die sich seitlich von der Außenseite des Rades (3) erstreckt und Markierungen darauf aufweisen, vorgesehen sind; und daß die länglichen Führungen (40, 41) relativ zur Befestigungseinheit so angeordnet sind, daß die Ausrichtscheiben (5) an gegenüberliegenden Kardinalstellen relativ zur Fahrzeugradachse derart angeordnet werden können, daß die Kardinalstellen aus relativ zur Drehachse des Rades (3) vertikal ausgerichteten oberen und unteren Stellen (63, 64) und horizontal ausgerichteten vorderen und hinteren Stellen (65, 66) ausgewählt werden können.

2. Ausrichtscheibenanordnung nach Anspruch 1, dadurch gekennzeichnet, daß der Ausrichtscheibenträger an der Befestigungseinheit mittels eines im Drehmittelpunkt eines Rades, an dem die Befestigungseinheit befestigt ist, angeordneten Drehzapfens (48) drehbar befestigt ist.

3. Ausrichtscheibenanordnung nach Anspruch 2, dadurch gekennzeichnet, daß der Drehzapfen einen Schraubbolzen (48) aufweist, der von der Befestigungseinheit getragen ist und durch die Tragstruktur hindurchgeht, und einen mit einem Gewinde versehenen Knauf (50), der auf dem Schraubbolzen gewindemäßig befestigt ist und eine relative Drehung zwischen dem Ausrichtscheibenträger und der Befestigungseinheit zuläßt, jedoch eine Arretierung des Ausrichtscheibenträgers in einer besonderen Drehstellung erlaubt, aufweist.

4. Ausrichtscheibenanordnung nach einem der vorhergehenden Ansprüche, dadurch gekennzeichnet, daß die Befestigungseinheit ein inneres Radbefestigungselement (24) und obere und untere Armelemente (20, 21) umfaßt, die vom Befestigungselement getragen sind und Endbereiche (27, 37) einschließlich einer Einrichtung (30, 38) zum Eingriff mit einem Rad aufweisen, wodurch das Befestigungselement neben und parallel zur Seite eines Rades befestigt werden kann.

5. Ausrichtscheibenanordnung nach einem der vorhergehenden Ansprüche, dadurch gekennzeichnet, daß die länglichen Führungen des Ausrichtscheibenträgers waagrechte Schaftelemente (41, 44, 45), die mit den in Horizontalrichtung einen Abstand aufweisenden vorderen und hinteren Stellen ausgerichtet sind, und senkrechte Schaftelemente (40), die mit den in Vertikalrichtung einen Abstand aufweisenden oberen und unteren Stellen ausgerichtet sind, aufweisen, wobei die waagrechten und senkrechten Schaftelemente zusammen ein Kreuz mit einem koaxial zum Drehmittelpunkt eines Rades, an dem die Befestigungseinrichtung befestigt ist, angeordneten Mittelpunkt bilden, und wobei vier Ausrichtscheiben vorgesehen sind, die jeweils an einem entsprechenden Schaftelement an der Stelle des Randes eines Rades befestigt sind.

6. Ausrichtscheibenanordnung nach Anspruch 3, 4 und 5, dadurch gekennzeichnet, daß der Ausrichtscheibenträger eine Nivellieranzeigevorrichtung (52) zum Bestimmen der waagrechten Orientierung des waagrechten Schaftelementes umfaßt.

7. Ausrichtscheibenanordnung nach Anspruch 5 oder 6, dadurch gekennzeichnet, daß die Schaftelemente (40, 44, 45) jeweils einen Arm (59) aufweisen, der sich von einer Stelle neben dem freien Ende der Schaftelemente im wesentlichen horizontal nach außen vom Rad weg erstreckt, und daß die Ausrichtscheiben auf den Armen befestigbar sind.

8. Ausrichtscheibenanordnung nach Anspruch 7, wobei zumindest einige der Arme (59) an Endbereichen (60) befestigt sind, die an dem zugehörigen Schaftelement einstellbar festklemmbar sind.

9. Ausrichtscheibenanordnung nach Anspruch 5, 6, 7 oder 8, dadurch gekennzeichnet, daß an den waagrechten Schaftelementen (44 bzw. 45) eine vordere Vorspur-Ausrichtscheibe (65) und eine hintere Vorspur-Ausrichtscheibe (66) befestigt sind, und daß an den oberen und unteren Enden des senkrechten länglichen Schaftelementes (40) eine obere bzw. untere Vorlauf-/Radsturz-Ausrichtscheibe (63, 64) befestigt ist.

10. Ausrichtscheibenanordnung nach Anspruch 5, 6, 7, 8 oder 9, dadurch gekennzeichnet, daß an einem Schwingarm (96), der an einem am Ausrichtscheibenträger befestigbaren Element (94) hin- und herschwingbar angebracht ist, eine vordere Achsschenkelbolzenneigung-Ausrichtscheibe (104) und eine hintere Achsschenkelbolzenneigung-Ausrichtscheibe (105), um eine seitlich pendelnde Bewegung derselben zu ermöglichen, befestigt sind.

## Revendications

1. Structure de cible destinée à être utilisée avec un dispositif d'alignement des roues d'un véhicule, ladite structure de cible comprenant un support de cible (4) ayant un guide allongé pour supporter une cible (5) en un point réglable dans le sens de sa longueur, un ensemble de montage (19 à 38) pouvant être monté sur le flanc extérieur d'une roue de véhicule (3) pour monter le support de cible (4) contre cette roue de véhicule (3), et la cible (5) pouvant être fixée au guide allongé du support de cible (4) de façon à se trouver à une certaine distance de l'axe de rotation de cette roue de véhicule (3), la structure de cible (4) étant caractérisée en ce qu'il y a deux desdits guides allongés (40, 41) disposés orthogonalement l'un par rapport à l'autre et au moins deux cibles (63 à 68, 104, 105) portées par un desdits guides allongés (40, 41) qui leur correspond, et ayant chacune une face plane s'étendant latéralement au flanc extérieur de la roue (3) et portant les repères; et en ce que les guides allongés (40, 41) sont disposés, par rapport à l'ensemble de montage, de telle sorte que les cibles (5) peuvent être disposées en des emplacements cardinaux opposés par rapport à l'axe de ladite roue de véhicule, lesdits emplacements cardinaux pouvant être choisis entre les emplacements supérieurs et inférieurs verticalement alignés (63, 64) et les emplacements antérieurs et postérieurs horizontalement alignés (65, 66) par rapport à l'axe de rotation de la roue (3).

2. Structure de cible selon la revendication 1, caractérisée en ce que ledit support de cible est monté pivotant sur ledit ensemble de montage par un pivot (48) placé au centre de rotation d'une roue sur laquelle est monté ledit moyen de montage.

3. Structure de cible selon la revendication 2, caractérisée en ce que ledit pivot comprend un boulon (48) porté par ledit ensemble de montage et passant par ladite structure de support, et un bouton fileté (50) qui se visse sur ledit boulon et qui permet une rotation relative dudit support de cible et dudit ensemble de montage, tout en permettant au support de cible d'être bloqué dans une position de rotation donnée.

4. Structure de cible selon l'une quelconque des revendications précédentes, caractérisée en ce que l'ensemble de montage comprend un élément intérieur de montage de roue (24), des éléments de bras supérieur et inférieur (20, 21) portés par ledit élément de montage et ayant des parties terminales (27, 37), comprenant des moyens (30, 38) destinés à s'engager sur une roue, de sorte que l'élément de montage puisse être monté à proximité du flanc d'une roue et parallèlement à celui-ci.

5. Structure de cible selon l'une quelconque des revendications précédentes, caractérisée en ce que lesdits guides allongés du support de cible (4) comprennent des éléments d'arbre horizontaux (41, 44, 45) alignés avec lesdits emplacements antérieur et postérieur horizontalement espacés, et des éléments d'arbre verticaux (40) alignés avec lesdits emplacements supérieur et inférieur verticalement espacés, lesdits éléments d'arbre horizontaux et verticaux formant ensemble une croix dont le centre est coaxial au centre de rotation d'une roue sur laquelle est monté le moyen de montage, quatre cibles étant prévues, montées chacune sur un desdits éléments d'arbre qui leur correspond, à l'emplacement du bord d'une roue.

6. Structure de cible selon la revendication 3, la revendication 4 et la revendication 5, caractérisée en ce que ledit support de cible comporte un indicateur de niveau (52) pour déterminer l'orientation horizontale des éléments d'arbre horizontaux.

7. Structure de cible selon la revendication 5 ou 6, caractérisée en ce que lesdits éléments d'arbre (40, 44, 45) ont chacun, partant d'un point voisin de leurs extrémités libres, un bras (59) qui s'étend généralement à l'horizontale vers l'extérieur à l'opposé de la roue, les cibles pouvant être montées sur lesdits bras.

8. Structure de cible selon la revendication 7, dans laquelle au moins certains des bras (59) sont montés sur des parties terminales (60) qui peuvent être bloquées de manière réglable sur l'élément d'arbre correspondant.

9. Structure de cible selon la revendication 5, 6, 7 ou 8, caractérisée en ce qu'une cible antérieure de parallélisme (65) et une cible postérieure de parallélisme (66) sont montées sur les éléments d'arbre horizontaux (44 et 45 respectivement), et en ce que des cibles supérieure et inférieure de chasse et de carrossage (63, 64) sont montées respectivement sur les extrémités supérieure et inférieure de l'élément d'arbre allongé vertical (40).

10. Structure de cible selon la revendication 5, 6, 7, 8 ou 9, caractérisée en ce qu'une cible antérieure (104) d'inclinaison de pivot et une cible postérieure (105) d'inclinaison de pivot sont montées de façon à pouvoir osciller de côté et d'autre sur un bras oscillant (96), pouvant osciller sur un élément (94) qui peut être monté sur le support de cible.

0 034 923

Fig. 1.

Fig. 2.

Fig. 3.

1

*Fig. 4.*

*Fig. 6.*

*Fig. 5.*

*Fig. 7.*

0 034 923

Fig. 9.

Fig. 8.

Fig. 10.

Fig. 11.

Fig. 12.

98
100
101
102
103
TURNING RADIUS DEGREES
114
115
113
KPI
12 8 4
4 2 2 4 6
12 8 4
6 4 2 2 4
0°
KPI
105

Fig. 13.

60
61
70
71
TOE
5
1/2 1/2 1/2 1 1/2
76
78
77
4 3 2 1 1 2 3 4
79
66

Fig. 14.

61
60
5
73
70
75
74
65

Fig. 15.

70
61
60
6° 4° 2° 2° 4° 6°
63
84
86
+ CAMBER −
85
87

Fig. 16.

90
89
CASTER
68
8° 6° 4° 2° 2° 4° 6° 8°
70
61
60

Fig. 17.

82
83
81
CASTER CAMBER
64
70
60
61

0 034 923

Fig. 19

Fig. 18

Fig. 21

Fig. 20

Fig 25

Fig 24

Fig 23

Fig 22

Fig 28

Fig 27

Fig 26